# Europäisches Patentamt

## European Patent Office

## Office européen des brevets

(11) Publication number: **0 128 960**
**B1**

(12) # EUROPEAN PATENT SPECIFICATION

(45) Date of publication of patent specification: **04.04.90**

(51) Int. Cl.⁵: **G 11 B 11/10**

(21) Application number: **84900112.8**

(22) Date of filing: **20.12.83**

(86) International application number:
**PCT/JP83/00445**

(87) International publication number:
**WO 84/02603 05.07.84 Gazette 84/16**

(54) **THERMOMAGNETIC OPTICAL RECORDING/REPRODUCING METHOD.**

(30) Priority: **23.12.82 JP 232433/82**
**09.12.83 JP 233239/83**

(43) Date of publication of application:
**27.12.84 Bulletin 84/52**

(45) Publication of the grant of the patent:
**04.04.90 Bulletin 90/14**

(84) Designated Contracting States:
**DE FR GB NL**

(56) References cited:
**EP-A-0 061 892**
**JP-A-5 674 843**
**JP-A-56 117 345**

(73) Proprietor: **SONY CORPORATION**
**7-35 Kitashinagawa 6-Chome Shinagawa-ku**
**Tokyo 141 (JP)**

(72) Inventor: **KANEKO, Masahiko**
**Sony Corporation 7-35, Kitashinagawa 6-chome**
**Shinagawa-ku Tokyo 141 (JP)**
Inventor: **TAMADA, Hitoshi**
**Sony Corporation 7-35, Kitashinagawa 6-chome**
**Shinagawa-ku Tokyo 141 (JP)**

(74) Representative: **Cotter, Ivan John et al**
**D. YOUNG & CO. 10 Staple Inn**
**London WC1V 7RD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to thermomagnetic recording systems and to thermomagnetic recording and reproducing systems. Such systems can be used in optical magnetic disc apparatus or the like.

Our European Patent Application Publication No. EP—A—0,061,892 (and our Japanese Patent Application Publication No. JP—A—57158005) discloses a thermomagnetic recording system which uses a layer of soft magnetic material having an easy axis of magnetisation normal to the layer surface, on which thermomagnetic recording is performed by irradiating laser light thereon. The layer of soft magnetic material is, for example, a YSmCaFeGe-series garnet such as $(YSmCa)_3(FeGe)_5O_{12}$ or the like, having uniaxial magnetic anisotropy which is strong in the direction normal to the layer surface and an easy axis of magnetisation normal to the layer surface. The layer of soft magnetic material having an easy axis of magnetisation normal to the layer surface is required to have such a soft magnetic property that, when the layer is used as a magnetic recording medium, the diameter of information bits to be written therein is practically determined only by a bias magnetic field, and the coercive force thereof is desired to be less than about 240 A/m (3 Oe), preferably about 80 A/m (1 Oe) or below. The layer is formed by growing it on a crystalline substrate of rare-earth gallium garnet, such as non-magnetic gadolinium gallium garnet (GGG), by liquid phase epitaxial (LPE) growth of YSmCaFeGe-series garnet crystal or the like. The writing of information on the layer is carried out by first applying a bias magnetic field of a predetermined strength to the layer so as to make the layer magnetised to have a single magnetic domain over the whole visual field thereof and a direction of magnetisation oriented perpendicularly to the layer surface. Then, under this state, when an optical pulse is incident on the layer surface and focused thereon, the writing of information bits on the layer can be performed. The bits thus written are cylindrical magnetic domains each having a predetermined diameter and a direction of magnetisation which is of opposite direction to the applied bias magnetic field.

The strength of the bias magnetic field applied to the layer of soft magnetic material so as to produce a single magnetic domain therein over the whole visual field thereof is selected to be in a range from the run-out magnetic field to the collapse magnetic field of the material, for example, between 4536 A/m (57 Oe) and 5809 A/m (73 Oe) for the above-mentioned LPE layer of $(YSmCa)_3 (FeGe)_5O_{12}$. Because the coercive force, particularly the magnetic wall coercive force, of the layer of soft magnetic material is extremely small, and hence the bias magnetic field applied thereto can be small, the bias magnetic field applying means may be a small solenoid coil, rubber magnet or the like.

The reading out of information recorded on the magnetised layer is carried out by irradiating the record medium with light, for example laser light that is linearly polarised by a polariser. When the linearly polarised light passes through the magnetised layer, it is subjected to rotation of its plane of polarisation by the Faraday effect. Thus, if this rotated light is applied through an analyser to a photo-detecting means, an output corresponding to the information bits is produced therefrom and hence reading out of the information is performed.

In the above thermomagnetic recording system, however, the garnet film used as a recording layer presents transmissivity to light of a wavelength longer than about 530 nm, whereby light of such a long wavelength can almost not be absorbed by a film having a thickness of 10 micrometres or less. Therefore, in this thermomagnetic recording system, an Argon laser having a wavelength of, for example, 488 nm is used for the light source.

Japanese Patent Application Publication No. JP—A—56117345 discloses a thermomagnetic recording system comprising: a recording medium formed by a flexible plastic substrate having thereon a layer of hard magnetic material, a gas layer, a dielectric multi-layer film, a transparent magnetic film, and a transparent substrate; means for applying a magnetic film to the layer of hard magnetic material; and means for irradiating the recording medium with laser light.

Information can be written on the layer of hard magnetic material by irradiating the layer with laser light at a first wavelength (633 nm). The light of the first wavelength is directed to the layer of hard magnetic material via the transparent substrate, the transparent magnetic film and the dielectric multi-layer film (which can transmit light of the first wavelength) and heats the layer of hard magnetic material. The information thereby recorded on the layer of hard magnetic material is transferred to the transparent magnetic film and can be read out by using laser light having a second wavelength (514 nm) by using the Faraday effect. In the case of reading, the reading light is reflected by the dielectric multi-layer film, since that film has a high reflectivity with respect to light at the second wavelength and thus acts as a mirror to it.

According to the present invention there is provided a thermomagnetic recording system comprising:

a recording medium formed by laminating a first layer of soft magnetic material having an easy axis of magnetisation normal to the layer surface, a transparent non-magnetic intermediate layer, a second layer of soft magnetic material having an easy axis of magnetisation normal to the layer surface and a metal or semi-metal film adjacent the second layer;

means for applying a bias magnetic field to the recording medium such that the first and second layers of the soft magnetic material are magnetised to have a single magnetic domain over their whole surfaces and a direction of magnetisation oriented perpendicularly to the layer surfaces; and

a light pulse generating means for making a light pulse having a first wavelength incident on the first layer of soft magnetic material to form a cylindrical magnetic domain magnetised in the direction opposite to the direction of magnetisation of the applied bias magnetic field so as thereby to record an information bit in said first layer, and for making a light pulse having a second wavelength which passes through the first and second layers of soft magnetic material incident on said second layer to form a cylindrical magnetic domain magnetised in the direction opposite to the direction of magnetisation of the applied bias magnetic field so as thereby to record an information bit in said second layer.

Embodiments of the inventions described in detail below enable even a semiconductor laser having a long wavelength, which could not be absorbed by a magnetised film, to be used to record information. As a result, the embodiments of the invention are capable, as described below, of increasing recording density and of logical calculation.

The invention will now be further described, by way of illustrative and non-limiting example, with reference to the accompanying drawings, in which:

Figures 1 and 2 are schematic cross-sectional views of respective record media which can be used in systems embodying the invention;

Figure 3 is a diagram useful for explaining a recording mode of the media;

Figure 4 is a diagram of a thermomagnetic recording and reproducing system embodying the invention;

Figures 5 and 6 are, respectively, a phase diagram and an output level graph useful for explaining the operation of the system;

Figure 7 is a graph useful for explaining a relationship between incident light power and a magnetic field for recording and erasing;

Figures 8 and 9 are respective graphs useful for explaining the rewriting of calculated results;

Figure 10 is a graph showing optical characteristics for different thicknesses of a semi-metal film; and

Figure 11 is a graph showing optical characteristics for different thicknesses of a metal film.

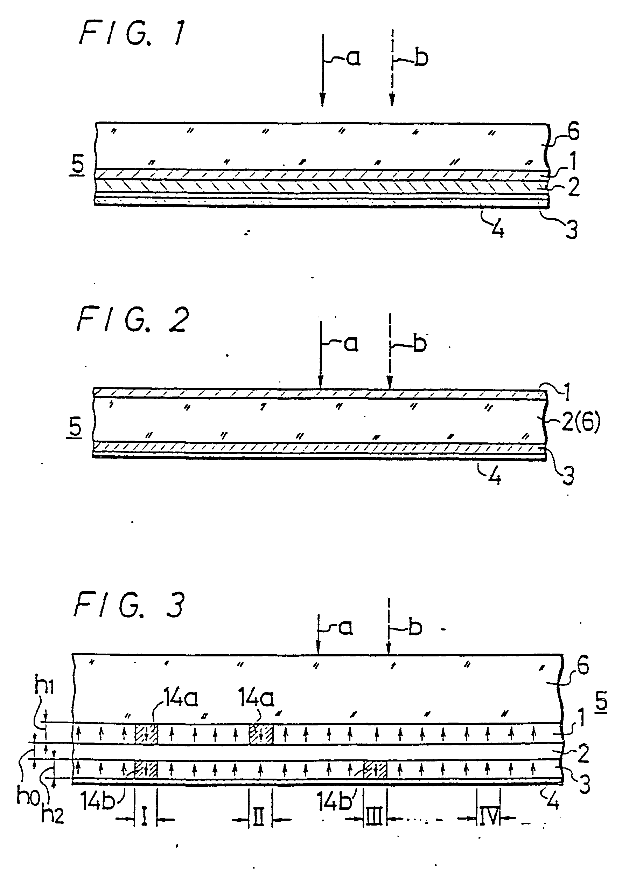

Figure 1 or 2 show respective recording media 5, in each of which at least a first layer 1 of soft magnetic material having an easy axis of magnetisation normal to the layer surface, a transparent non-magnetic intermediate layer 2, a second layer 3 of soft magnetic material having an easy axis of magnetisation normal to the layer surface and a metal or semi-metal film 4 adjacent to the second layer of soft magnetic material are superposed on one another so as thereby to form the recording medium 5. As described in more detail below, in the recording medium 5 shown in Figure 1 the layers 1, 2 and 3 and the film 4 are disposed as shown on a substrate 6, whereas in the recording medium 5 shown in Figure 2 the intermediate layer 2 and the substrate 6 are one and the same element.

Upon recording, a bias magnetic field is applied to the first and second magnetic layers 1 and 3 such that they are each magnetised to have a single magnetic domain and a direction of magnetisation oriented perpendicularly to the layer surfaces over their whole surfaces. If, under this condition, a light pulse having a first wavelength, for example a relatively short wavelength, absorbed with a relatively high optical absorptance in the magnetic layer, is made incident on the single magnetic domain of the first magnetic layer 1, cylindrical magnetic domains are formed which are magnetised in the opposite direction to the direction of magnetisation of the applied bias magnetic field. Thus, information bits are recorded on the first magnetised layer 1. If, on the other hand, a light pulse having a second wavelength, for example a relatively long wavelength, which can pass through the first and second magnetised layers 1 and 3, is made incident on the single magnetic domain of the second magnetised layer 3, the light is absorbed in the metal or semi-metal film 4 to locally heat the second magnetised layer 3 so as thereby to form cylindrical magnetic domains magnetised in the opposite direction to the direction of magnetisation of the applied bias magnetic field, whereby information bits are recorded on the second magnetised layer 3.

The metal or semi-metal film 4 may be made of any metal of the transition metals of groups Ib, IIb, IIIa, IVa, Va, VIa, VIIa and VIII, and group IIIB except boron B and Pb of the periodic table, and especially of metals with a melting point higher than the temperature encountered upon recording, typically such as Al or Cr or any alloy of them. The semi-metal film may be made of Te, Bi, Sb or an alloy of them.

When the thickness of the metal or semi-metal film 4 is less than 5 nm (50 Angstroms) it is difficult for light to be absorbed, whereas if it exceeds 100 nm (1000 Angstroms) much energy is necessary to heat the film 4. It is thus desirable that the thickness of the metal or semi-metal film 4 be selected to be as thin as possible within the range of from 5 to 100 nm (50 to 1000 Angstroms).

Reading from the medium 5 of information recorded thereon as described above is performed by utilising a magneto-optic effect. That is, a pulse beam of laser light having a relatively long wavelength, for example He-Ne laser light or semiconductor laser light, is linearly polarised by a polariser and introduced into the medium 5. When the light passes through the first and second magnetised layers 1 and 3, its plane of polarisation is subjected to Faraday rotation. In this case, depending on the presence or absence of information bits in the first and second magnetised layers 1 and 3, in other words depending on the presence or absence of magnetic bubble domains, its angle of rotation becomes different so that, if this light is introduced into an analyser in which the intensity of the light passed therethrough is detected as an electrical signal, the information can be read out or reproduced. Since different angles of rotation can be derived for four different recording modes, namely (1) information bits exist in both of the first and second magnetised layers, (ii) information bits exist only in the first magnetised layer, (iii) information bits exist only in the second magnetised layer and (iv) information bits exist in neither of the first and second magnetised layers, the read-out signal can comprise quaternary or ternary outputs. Further, in this case, depending on the setting of a threshold value for a detecting level of these outputs and the polarity thereof, the detected outputs can be read out as desired as any one of an AND output, an OR output, a NAND output and a NOR output which result from calculating the information recorded on the first and second magnetised layers.

As described above, the recording of quaternary or ternary information can be carried out by forming information bits in the first and second magnetised layers 1 and 3. Upon recording, light of two kinds having different wavelengths, namely light having a relatively long wavelength and light having a short wavelength, are used. Since the metal or semi-metal film 4 is formed on the recording medium, it is possible efficiently to record even recording light of long wavelength which is absorbed with low optical absorptance in the magnetised layer. Since the recording of quaternary or ternary information can be carried out, it is possible to carry out high density recording. Also, since the calculation function can be established together with the recording, there is an advantage that high speed logical calculation is made possible by this direct calculation. Further, if the calculated result is rewritten in the medium 5, it is not necessary to prepare a special means for storing therein the calculated result so that the apparatus can be made compact in size and, further, its application can be expanded.

Examples of how the invention can be carried out using recording media as described above with reference to Figures 1 and 2 will now be set forth in detail.

Example 1

As shown in Figures 1 and 3, on a transparent crystalline substrate 6 made of $Gd_3Ga_5O_{12}$ garnet (GGG) and having a thickness of, for example, 500 micrometres or the like, the first layer 1 of soft magnetic material having an easy axis of magnetisation normal to the layer surface, the transparent non-magnetic intermediate layer 2 and the second layer 3 of soft magnetic material having an easy axis of magnetisation normal to the layer surface were formed in turn by a liquid-phase epitaxial growth technique (LPE technique), and the metal or semi-metal film 4 was formed thereon whereby a recording medium 5 was formed. The first and second layers 1 and 3 of soft magnetic material can be formed so as to have predetermined thicknesses h1 and h2 of, for example, 3 micrometres and 2 micrometres, respectively. The transparent non-magnetic intermediate layer 2 interposed therebetween can be a GGG layer having a predetermined thickness h0 of, for example, 5 micrometres. The metal or semi-metal film 4 formed on the second layer 3 may be formed of Te and have a thickness of, for example, 100 nm (1000 Angstroms). The thermal conductivity of the Te semi-metal film 4 was 0.015 W/cm.deg and its melting point was 450°C. The Te film 4 of 100 nm (1000 Angstroms) thickness showed an optical absorptance $\alpha$ of 75 % and a reflectivity $\rho$ of 25 %, for example for He—Ne laser light having a wavelength of 633 nm, and an optical absorptance $\alpha$ of 72 % and a reflectivity $\rho$ of 26 % for semiconductor laser light having a wavelength of 830 nm.

The recording of information on the thermomagnetic recording medium 5 made as described above can be effected such that respective information can be recorded on the first and second layers 1 and 3 of soft magnetic material having an easy axis of magnetisation normal to the layer surface. When the items of information recorded on the layers 1 and 3 are combined with each other, quaternary or ternary information can be recorded thereon and then read out therefrom. Upon reading the information items on both layers, the calculation function can also be performed based upon both the information items and, further, the calculated result can be re-written in the recording medium.

The recording, namely the writing, of information on the first and second layers 1 and 3 of soft magnetic material in the thermomagnetic recording medium 5 made as described above is carried out by irradiating light having wavelengths of two kinds on the recording medium from the side opposite to the side of the metal or semi-metal film 4, namely from the side of a substrate 6 in this example, as shown by references a and b in Figures 1 and 3. That is, the recording of information on the first layer 1 is carried out by light having a first wavelength which is absorbed with high optical absorptance in the layer 1, namely light having a relatively short wavelength such as Ar laser light having a wavelength of, for example, 488 nm, and the recording of information on the second layer 2 is carried out by a light having a second wavelength which is absorbed with low optical absorptance in the first layer 1 and hence passes substantially therethrough, namely light having a long wavelength such as He—Ne laser light having a wavelength of, for example, 633 nm or semiconductor laser light having a wavelength of 830 nm, and so on. In this case, the first and second magnetised layers 1 and 3 are made of, for example, the same material as mentioned before, to have a high optical transmissivity for light in the long wavelength region. However, since the second layer 3 has the metal or semi-metal film 4 formed on its rear surface, the light having the second wavelength can efficiently be absorbed in the metal film 4 and converted to heat energy whereby the information is recorded surely.

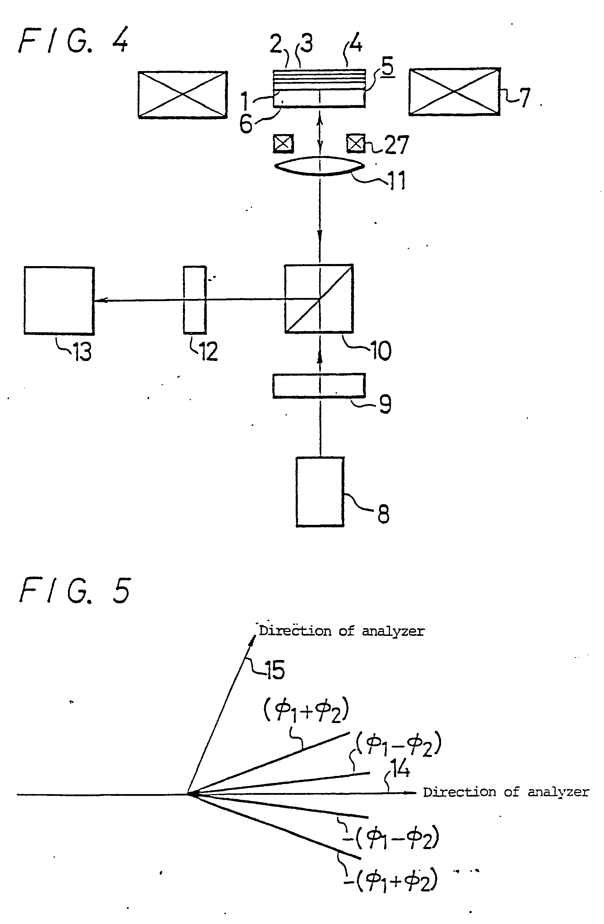

Recording (writing) on the recording medium 5 will now be described in more detail. As, for example, shown in Figure 4, a bias magnetic field generating coil, for example, acting as a bias magnetic field generating means 7, is located around the medium 5. The bias magnetic field generating means 7 produces a bias magnetic field by which a single magnetic domain can be formed in the layers 1 and 3 of soft magnetic material over the whole visual fields thereof. The intensity of this bias magnetic field is selected in the range from the run-out magnetic field Hb (at which the magnetic bubble domains are shaped in line) to the collapse magnetic field Ho (at which no magnetic bubble domains are produced). A light source apparatus 8 is provided for generating the light having the first and second wavelengths.

When information is to be recorded on, for example, the first magnetised layer 1 of the medium 5, the light source apparatus includes a light source providing light having the first wavelength, for example an Ar laser or the like, and an optical modulator for modulating the light in response to the information to be recorded so as to produce a light pulse. The light pulse from the light source apparatus 8 is linearly polarised by a polariser 9 and then focused on the first recording layer 1 of the soft magnetic material through a half mirror 10 and an objective lens 11. Accordingly, almost all of this light is absorbed by the first recording layer 1, which has high optical absorptance for this light, namely light having a wavelength of 488 nm, and then converted to heat energy which causes the magnetisation of the first magnetised layer 1 to be inverted at its portion irradiated by the laser beam pulse so as thereby to form information bits 14a (Figure 3) as cylindrical magnetic domains (magnetic bubble domains).

When the recording of information is to be carried out on the second recording layer, namely the second layer 3 of soft magnetic material, the light source apparatus 8 provides a light pulse which results from modulating light by information to be recorded. The light has a high transmissivity for the first magnetised layer 1 and the second magnetised layer 3. Also, the light has a long wavelength and is derived from, for example, a He—Ne laser having a wavelength of 633 nm or a semiconductor laser having a wavelength of 830 nm. Similarly, this light pulse is focused near the boundary plane between the metal or semi-metal film 4 and the second magnetised layer 3 of the medium 5 through the polariser 9, the half mirror 10 and the objective lens 11. Thus, almost all of the light pulse having the second wavelength emitted from the light source apparatus 8 and modulated by the recording signal is passed or transmitted through the magnetised layers 1 and 3 and then almost all of the transmitted light pulse is absorbed in the metal or semi-metal film 4 behind the magnetised layer and then efficiently converted to heat energy. By virtue of this heat, the second magnetised layer 3 in contact with the metal or semi-metal film 4 is locally heated whereby information bits 14b (Figure 3) are written as the same cylindrical magnetic domains (magnetic bubble domains) as mentioned before. In this case, when the pulse width is 10 microseconds, an information bit can be recorded by an amount of incident light of more than 6 mW.

The recording of quaternary information can be carried out by forming information bits in the first and second magnetised layers 1 and 3 as described above. That is, as shown by regions I, II, III and IV in Figure 3, it is possible to carry out each recording of, for example, bit pairs having the values "1 1", "1 0" "0 1" and "0 0". More particularly, as shown in Figure 3, in the region I, information bits 14a and 14b are formed in both of the first and second magnetised layers 1 and 3, or the recording of "1" is carried out in each of the layers, so that the writing of "1 1" is carried out by the combination of the recordings in both the first and second magnetised layers. In the region II, "1" is recorded only in the first magnetised layer 1 by the information bit 14a so that the recording of "1 0" is carried out by the combination of both of the first and second magnetised layers 1 and 3. In the region III, the information bit 14b is formed, or "1" is recorded only in the second magnetised layer 3, so that the recording of "0 1" is carried out by the combination of both of the magnetised layers 1 and 3. In the region IV, recording is carried out in neither of the magnetised layers 1 and 3, or the recording of "0" is carried out in both of the magnetised layers, so that the recording of "0 0" is substantially carried out by the combination of both of the magnetised layers. (It was confirmed that the respective magnetic domains in the first and second magnetised layers 1 and 3 were made to be independent and stable magnetic domains due to the inter-position of the non-magnetic intermediate layer 2.)

Reading of the information recorded on the medium 5 as described above is performed by utilising a magneto-optic effect. For example, in similar manner to that shown in Figure 4, the light source apparatus 8 produces a light pulse of laser light having, for example, a relatively long wavelength, for example a light pulse from a He—Ne laser or semiconductor laser. This light pulse is linearly polarised by the polariser 9 and then directed to the medium 5. Accordingly, when the light passes through the first and second magnetised layers 1 and 3, its plane of polarisation is rotated by the Faraday effect. In this case, depending on the presence or absence of information bits or the presence or absence of magnetic bubble domains in the first and second magnetised layers 1 and 3, its angle of rotation becomes different so that, if the light pulse is refracted by the half mirror 10 and introduced into an analyser 12 and the light therefrom is then introduced into a photo-detector 13, the light pulse can be detected as an output electrical signal.

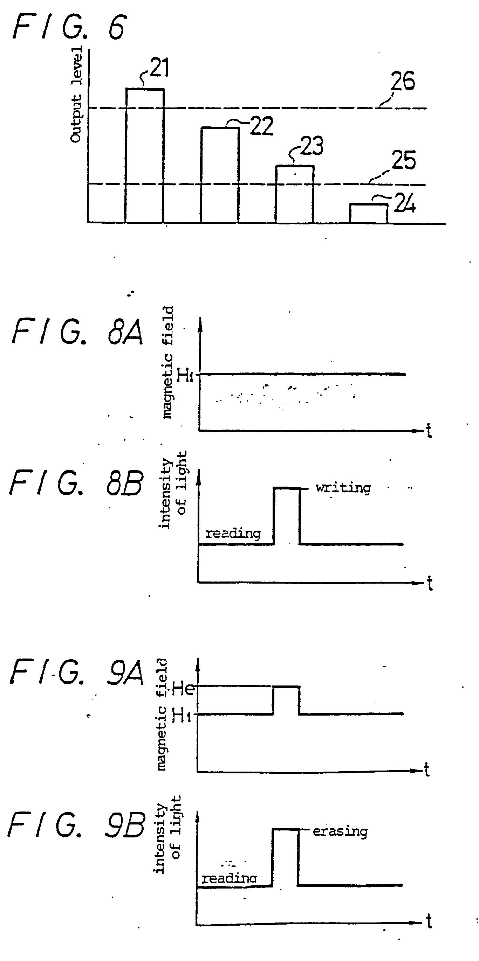

In other words, under the condition that the polariser 9 is disposed in the direction shown at 14 in Figure 5 and the analyser 12 is disposed in the direction shown at 15 in Figure 5, when the Faraday angles of rotation caused by the first and second magnetised layers 1 and 3 are taken as $\phi1$ and $\phi2$, respectively, detected light which has passed through the portions of the first and second magnetised layers 1 and 3 in which the magnetic bubble domains are formed as in the region I of Figure 3 is subjected to a Faraday rotation of the plane of polarisation of an angle of ($\phi1 + \phi2$), in the region II to a rotation of ($\phi1 - \phi2$), in the region III to a rotation of ($\phi1 - \phi2$), and in the region IV to a rotation of $- (\phi1 + \phi2)$. Accordingly, if the condition that $\phi1$ is not equal to $\phi2$ is assumed, when the direction of the analyser 12 of Figure 4 is selected to be as shown at 15 in Figure 5, outputs of different levels shown at 21 to 24 in Figure 6 can be obtained from the respective regions I to IV in Figure 3. The condition that $\phi1$ is not equal to $\phi2$ can be established by making the thicknesses of the first and second magnetised layers 1 and 3 different or by making the layers of different materials.

Then, if a threshold value for a detecting level for the outputs 21 to 24 is set to either the level shown by a broken line 25 in Figure 6 or the level shown by a broken line 26 in Figure 6, the reading thereof and also the above-described logical calculation function can be achieved. When the threshold value for detection is set to the level 26, namely to a level which is higher than the outputs 22, 23 and 24 from the regions II, III and IV but lower than the output 21 from the region I, and an output having the value "1" is derived only if the output level exceeds this threshold value and an output having the value "0" is derived if the output level is below this threshold value, it is possible to obtain an AND output of the information bits recorded on the first and second magnetised layers 1 and 3. Also, if the threshold value is set to the level 25, namely to a level which is lower than the levels of the outputs 21 to 23 from the regions I to III but higher than the level of the output 24 from the region IV, and the output is detected under the condition that an output level exceeding this threshold value is taken as "1" whereas an output level below this threshold value is taken as "0", it is possible to obtain an OR output of the information bits recorded in the first and second magnetised films 1 and 3. Similarly, if the threshold value is set to the level 25 and an output level higher than this threshold value is taken as "0" and an output level lower than this threshold value is taken as "1", it is possible to obtain a NAND output. Further, if the threshold value is set to the level 26 and an output level higher than this threshold value is taken as "0" and an output level lower than this threshold value is taken as "1", it is possible to obtain a NOR output. Thus, as described above, at the same time that reading of the recorded information is performed, a calculation function of the information can be established.

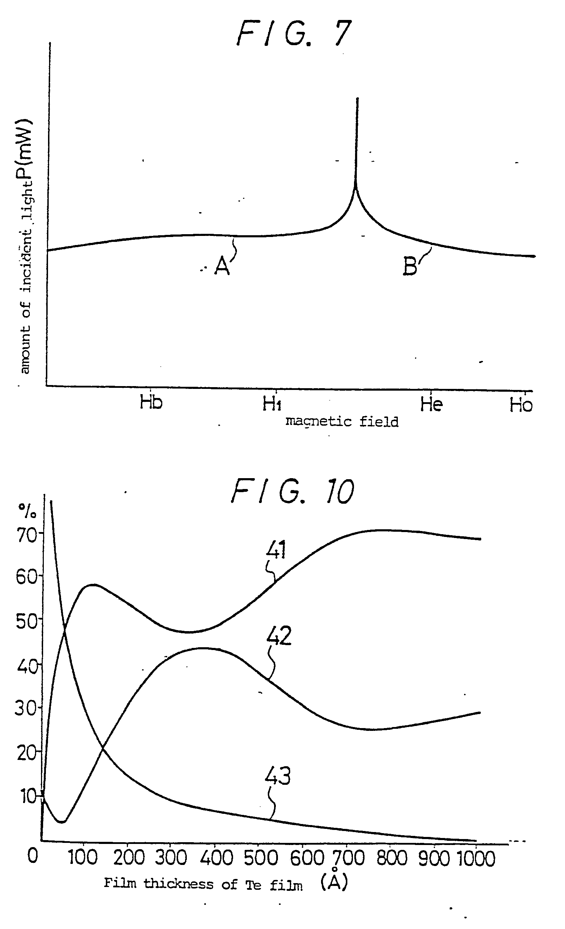

Further, in some cases, the calculated result, which is obtained at the same time as the readout, can be re-written in the medium 5 and then stored therein. That is, in the above recording medium, the magnetic wall coercive force of the magnetised layer is sufficiently smaller than the bias magnetic field applied thereto so that the information bits recorded as cylindrical magnetic domains having a direction of magnetisation opposite to the direction of the bias magnetic field which is previously recorded information can be erased by changing the intensity of the applied bias magnetic field without changing the direction thereof and by irradiating light thereon. In Figure 7, curves A and B indicate relationships between the amount of incident light and bias magnetic field for writing and erasing respectively. Writing is carried out in the upper left-hand side region of the curve A, while erasing is carried out in the upper right-hand side region of the curve B. Accordingly, it is possible to erase previously recorded information by means of a light pulse exceeding the curve B under the application of a bias magnetic field He. The bias magnetic field He can be produced by superposing a magnetic field, provided by a small coil 27 provided in front of the objective lens 11 as shown in Figure 4, on the bias magnetic field H1 for recording provided by the bias magnetic field generating means (coil) 7 shown in Figure 4. On the other hand, if the pulse magnetic field for erasing is not superposed, but a light pulse of the necessary amount is applied to the magnetised layer, regardless of the presence or absence of the previously recorded information, it is possible to record the information by this light pulse finally. In this way, the calculated result can be recorded in the second layer 3.

A case in which, for example, the information "0" written in the second magnetised layer 3 is re-written to the information "1" will now be described. Under the condition that the constant magnetic field H1 as shown in Figure 8A is applied to the magnetised layer 3 by the means 7, if, as shown in Figure 8B, laser light having, for example, the second wavelength in the form of a light pulse of a predetermined level is irradiated on the magnetised layer, the recording of "1" is carried out. Under the condition that "1" is recorded in the magnetised layer 3, in order that this recorded information is erased and "0" is then recorded, if the pulse magnetic field He of an erase magnetic field level from the coil 27 as shown in Figure 9A is applied to the magnetised layer and a light pulse, which reaches the erase level during the above interval as shown in Figure 9B, is applied thereto, the writing of "0" can be carried out.

The reading of the information recorded on the medium 5 is not limited to scanning by laser light as described above. The following technique is possible. Light is irradiated on the medium 5 over, for example, the whole area thereof, to temporarily form in another place an information image of the layer surface and this image is made as a binary level, namely, light and shade, and then read out by a television camera.

In the medium 5 shown in Figures 1 and 3, the first and second magnetised layers 1 and 3 are superposed, with the interposition of the non-magnetic layer 2, on one surface of the substrate 6. In this case, since the layers 1 and 3 are disposed close to each other, when light for, for example, writing information therein is focused, the use of a focussing means having a small depth of focus becomes possible. Therefore, the diameter of the beam spot can be made small enough to carry out the writing and reading of information with high resolution. However, when, as shown in Figure 2, the medium 5 is formed such that the first and second layers 1 and 3 of soft magnetic material are formed on opposite surfaces of the crystalline substrate 6 (such as a GGG substrate or the like) and the metal film 4 is formed on the second magnetised layer 3 and the non-magnetic layer 2 for magnetically separating the first and second magnetised layers 1 and 3 from each other is formed by the substrate 6 itself, there is an advantage that the manufacturing process becomes easy.

In the above example, the metal film 4 is a Te film having a thickness of 100 nm (1000 Angstroms). Its optical absorptance $\alpha$, reflectivity $\rho$ and transmissivity $\tau$ become different depending on its thickness. In Figure 10, curves 41, 42 and 43 respectively indicate the relationships of $\alpha$, $\rho$ and $\tau$ to the thickness of the Te film at the wavelength of 830 nm.

The metal film 4 is not limited to Te, but may be made of Bi, Sb or an alloy of them. The thermal conductivities and the melting points of Bi and Sb are 0.085 W/cm.deg, 0.18 W/cm.deg and 271°C, 631°C, respectively.

### Example 2

Instead of the Te film having a thickness of 100 nm (1000 Angstroms) used in Example 1, a Cr film 4 having a thickness of 40 nm (400 Angstroms) was formed on the second magnetised layer 3 so as thereby to form the thermomagnetic recording medium 5. This recording medium 5 was irradiated with semiconductor laser light, having a wavelength of 830 nm and a beam diameter of 1 micrometre, from the side of the substrate 6, thereby to carry out the recording on the second magnetised layer 3. In this case, when the pulse width of the laser light was 1 microsecond, the minimum power necessary for the recording was 1.5 mW.

### Example 3

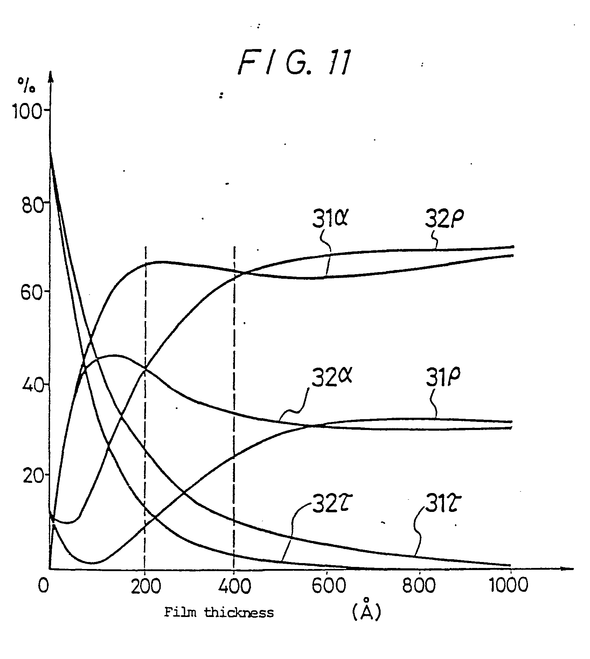

Instead of the Te film used in Example 1, an Al film 4 having a thickness of 20 nm (200 Angstroms) was formed on the second magnetised layer 3 to form the thermomagnetic recording medium 5. Semiconductor laser light having a wavelength of 830 nm and a beam diameter of 1 micrometre was made incident on the recording medium 5 from the side of the substrate 6 to thereby carry out recording on the second magnetised layer 3. In this case, when the pulse width of the laser light was 1 microsecond, the minimum power necessary for recording was 2.8 mW. The reason why the necessary power in Example 3 (using Al) is larger than that in Example 2 (which employed Cr) is probably that the Al film has a smaller optical absorptance $\alpha$ than the Cr film. Figure 11 shows the calculated results of optical characteristics of Cr and Al films of different thickness to semiconductor laser light (wavelength equal to 830 nm). Curves $31\alpha$ and $32\alpha$ indicate the optical absorptances of the Cr and Al films, respectively, curves $31\rho$ and $32\rho$ indicate the reflectivities of the Cr and Al films, respectively, and curves $31\tau$ and $32\tau$ indicate the optical transmissivities of the Cr and Al films, respectively.

## Claims

1. A thermomagnetic recording system comprising:

a recording medium (5) formed by laminating a first layer (1) of soft magnetic material having an easy axis of magnetisation normal to the layer surface, a transparent non-magnetic intermediate layer (2; 6), a second layer (3) of soft magnetic material having an easy axis of magnetisation normal to the layer surface and a metal or semi-metal film (4) adjacent the second layer (3);

means (7) for applying a bias magnetic field to the recording medium (5) such that the first and second layers (1, 3) of soft magnetic material are magnetised to have a single magnetic domain over their whole surfaces and a direction of magnetisation oriented perpendicularly to the layer surfaces; and

a light pulse generating means for making a light pulse having a first wavelength incident on the first layer (1) of soft magnetic material to form a cylindrical magnetic domain magnetised in the direction opposite to the direction of magnetisation of the applied bias magnetic field so as thereby to record an information bit (14a) in said first layer (1), and for making a light pulse having a second wavelength which passes through the first and second layers (1, 3) of soft magnetic material incident on said second layer (3) to form a cylindrical magnetic domain magnetised in the direction opposite to the direction of magnetisation of the applied bias magnetic field so as thereby to record an information bit (14b) in said second layer (3).

2. A thermomagnetic recording system according to claim 1, wherein the metal film (4) is made of a transition metal selected from groups Ib, IIb, IIIa, IVa, Va, VIa, VIIa and VIII of the periodic table, or of a metal selected from group IIIb (except boron and Pb) of the periodic table.

3. A thermomagnetic recording system according to claim 1, wherein the semi-metal film (4) is made of Te, Bi, Sb or an alloy of two or more of said metals.

4. A thermomagnetic recording system according to claim 2, wherein the metal film (4) is made of Al or Cr.

5. A thermomagnetic recording system according to any one of claims 1 to 4, wherein at least one of the layers (1, 3) of soft magnetic material is made of soft magnetic garnet.

6. A thermomagnetic recording system according to any one of the preceding claims, wherein the light pulse having the first wavelength is a pulse of Ar laser light.

7. A thermomagnetic recording system according to any one of the preceding claims, wherein the light pulse having the second wavelength is a pulse of He-Ne laser light or semiconductor laser light.

8. A thermomagnetic recording system according to any one of the preceding claims, wherein the metal or semi-metal film (4) has a thickness ranging from 5 to 100 nm (50 to 1000 Angstroms).

9. A thermomagnetic recording system according to any one of the preceding claims, wherein the non-magnetic intermediate layer (2; 6) is made of non-magnetic garnet.

10. A thermomagnetic recording system according to any one of the preceding claims, wherein the first and second layers (1, 3) of soft magnetic material are different in Faraday rotation angle.

11. A thermomagnetic recording system according to claim 10, wherein the first and second layers (1, 3) of soft magnetic material are different in thickness.

12. A thermomagnetic recording system according to claim 10 or claim 11, wherein the first and second layers (1, 3) of soft magnetic material are made of soft magnetic garnets having different compositions.

13. A thermomagnetic recording system according to any one of claims 1 to 12, having a reproduction arrangement comprising means to make light, which will pass through the first and second layers (1, 3) of soft magnetic material, incident on the magnetic recording medium (5) at its cylindrical magnetic domains so as thereby to reproduce the recorded information.

14. A thermomagnetic recording system according to any one of claims 1 to 12, having a reproduction arrangement comprising means to make light, which will pass through the first and second layers (1, 3) of soft magnetic material, incident on the recording medium (5), and means for detecting whether or not an output corresponding to information bits recorded on said first and second layers (1, 3) exceeds a selected threshold value (26) so as thereby to produce an AND-calculated output of the information bits recorded on said first and second layers (1, 3).

15. A thermomagnetic recording system according to any one of claims 1 to 12, having a reproduction arrangement comprising means to make light, which will pass through the first and second layers (1, 3) of soft magnetic material, incident on the recording medium (5), and means for detecting whether or not an output corresponding to information bits recorded on said first and second layers (1, 3) exceeds a selected threshold level (25) so as thereby to produce an OR — calculated output of the information bits recorded on said first and second layers (1, 3).

16. A thermomagnetic recording system according to any one of claims 1 to 12, having a reproduction arrangement comprising means to make light, which will pass through the first and second layers (1, 3) of soft magnetic material, incident on the recording medium (5), and means for detecting whether or not an output corresponding to informations bits recorded on said first and second layers (1, 3) exceeds a selected threshold value (25) so as thereby to produce a NAND-calculated output of the information bits recorded on said first and second layers (1, 3).

17. A thermomagnetic recording system according to any one of claims 1 to 12, having a reproduction arrangement comprising means to make light, which will pass through the first and second layers (1, 3) of soft magnetic material, incident on the recording medium (5), and means for detecting whether or not an output corresponding to informations bits recorded on said first and second layers (1, 3) exceeds a selected threshold value (26) so as thereby to produce a NOR calculated output of the information bits recorded on said first and second layers (1, 3).

**Patentansprüche**

1. Thermomagnetisches Aufzeichnungssystem mit folgenden Merkmalen:

einem Aufzeichnungsmedium (5), das durch schichtweises Zusammenfügen einer ersten Schicht (1) aus weichmagnetischem Material, dessen Achse leichter Magnetisierbarkeit zur Schichtoberfläche senkrecht steht, einer transparenten nichtmagnetischen Zwischenschicht (2; 6), einer zweiten Schicht (3) aus weichmagnetischem Material, dessen Achse leichter Magnetisierbarkeit zur Schichtoberfläche senkrecht steht, und einem an die zweite Schicht (3) angrenzenden Metall- oder Halbmetallfilm (4) gebildet ist,

Mitteln (7) zum Anlegen eines Vormagnetisierungsfeldes an das Aufzeichnungsmedium (5), derart, daß die erste und zweite Schicht (1, 3) aus weichmagnetischem Material in der Weise magnetisiert werden, daß über ihren gesamten Oberflächen eine einzige magnetische Domäne gebildet wird, wobei die Magnetisierungsrichtung senkrecht zu den Oberflächen der Schichten orientiert ist,

und einer Lichtimpuls-Generatoreinrichtung

zur Erzeugung eines Lichtimpulses mit einer ersten Wellenlänge, der auf die erste Schicht (1) aus weichmagnetischem Material auftrifft, um dort eine zylindrische magnetische Domäne mit zur Magnetisierungsrichtung des angelegten Vormagnetisierungsfeldes entgegengesetzter Magnetisierungsrichtung zu bilden und dadurch in der ersten Schicht (1) ein Informationsbit zu erzeugen, und

zur Erzeugung eines Lichtimpulses mit einer zweiten Wellenlänge, der die erste und die zweite Schicht (1, 3) aus weichmagnetischem Material durchdringt und auf die zweite Schicht (3) auftrifft, um dort eine zylindrische magnetische Domäne mit zur Magnetisierungsrichtung des angelegten Vormagnetisierungsfeldes entgegengesetzter Magnetisierungsrichtung zu bilden und dadurch in der zweiten Schicht (3) ein Informationsbit zu erzeugen.

2. Thermomagnetisches Aufzeichnungssystem nach Anspruch 1, bei dem der Metallfilm (4) aus einem aus den Gruppen Ib, IIb, IIIa, IVa, Va, VIIa und VIII des periodischen Systems ausgewählten Übergangsmetall oder aus einem aus der Gruppe IIIb (ausgenommen Bor und Pb) des periodischen Systems ausgewählten Metall besteht.

3. Thermomagnetisches Aufzeichnungssystem nach Anspruch 1, bei dem der Halbmetallfilm (4) aus Te, Bi, Sb oder einer Legierung aus zwei oder mehr dieser Metalle besteht.

4. Thermomagnetisches Aufzeichnungssystem nach Anspruch 2, bei dem der Metallfilm (4) aus Al oder Cr besteht.

5. Thermomagnetisches Aufzeichnungssystem nach einem der Ansprüche 1 bis 4, bei dem wenigstens eine der Schichten (1, 3) aus weichmagnetischem Material aus weichmagnetischem Granat besteht.

6. Thermomagnetisches Aufzeichnungssystem nach einem der vorhergehenden Ansprüche, bei dem der Lichtimpuls mit der ersten Wellenlänge ein Lichtimpuls eines Ar-Lasers ist.

7. Thermomagnetisches Aufzeichnungssystem nach einem der vorhergehenden Ansprüche, bei dem der Lichtimpuls mit der zweiten Wellenlänge ein Lichtimpuls eines He-Ne-Lasers oder eines Halbleiterlasers ist.

8. Thermomagnetisches Aufzeichnungssystem nach einem der vorhergehenden Ansprüche, bei dem Metall- oder Halbmetallfilm (4) eine Dicke im Bereich von 5 bis 100 nm (50 bis 100 Angström) hat.

9. Thermomagnetisches Aufzeichnungssystem nach einem der vorhergehenden Ansprüche, bei dem die nichtmagnetische Zwischenschicht (2; 6) aus nichtmagnetischem Granat besteht.

10. Thermomagnetisches Aufzeichnungssystem nach einem der vorhergehenden Ansprüche, bei dem die erste und die zweite Schicht (1, 3) aus weichmagnetischem Material sich in ihrem Faraday-Rotationswinkel unterscheiden.

11. Thermomagnetisches Aufzeichnungssystem nach Anspruch 10, bei dem die erste und die zweite Schicht (1, 3) aus weichmagnetischem Material unterschiedliche Dicke haben.

12. Thermomagnetisches Aufzeichnungssystem nach Anspruch 10 oder 11, bei dem die erste und die zweite Schicht (1, 3) aus weichmagnetischem Material aus weichmagnetischen Granaten mit unterschiedlichen Zusammensetzungen bestehen.

13. Thermomagnetisches Aufzeichnungssystem nach einem der Ansprüche 1 bis 12 mit einer Wiedergabeeinrichtung mit Mitteln zur Erzeugung von Licht, das durch die erste und die zweite Schicht (1, 3) aus weichmagnetischem Material hindurchtritt und auf das magnetische Aufzeichnungsmedium (5) in seinen zylindrischen magnetischen Domänen auftrifft und dadurch die aufgezeichnete Information wiedergibt.

14. Thermomagnetisches Aufzeichnungssystem nach einem der Ansprüche 1 bis 12 mit einer Wiedergabeeinrichtung mit Mitteln zur Erzeugung von Licht, das durch die erste und die zweite Schicht (1, 3) aus weichmagnetischem Material hindurchtritt und auf das magnetische Aufzeichnungsmedium (5) in seinen zylindrischen magnetischen Domänen auftrifft, sowie mit Mitteln zur Feststellung, ob ein Ausgangssignal, das auf der ersten und der zweiten Schicht (1, 3) aufgezeichneten Informationsbits entspricht, einen vorbestimmten Schwellwert (26) überschreitet oder nicht, und zur Erzeugung eines UND-verknüpften Ausgangssignals der auf der ersten und der zweiten Schicht (1, 3) aufgezeichneten Informationsbits.

15. Thermomagnetisches Aufzeichnungssystem nach einem der Ansprüche 1 bis 12 mit einer Wiedergabeeinrichtung mit Mitteln zur Erzeugung von Licht, das durch die erste und die zweite Schicht (1, 3) aus weichmagnetischem Material hindurchtritt und auf das magnetische Aufzeichnungsmedium (5) in seinen zylindrischen magnetischen Domänen auftrifft, sowie mit Mitteln zur Feststellung, ob ein Ausgangssignal, das auf der ersten und der zweiten Schicht (1, 3) aufgezeichneten Informationsbits entspricht, einen vorbestimmten Schwellwert (25) überschreitet oder nicht, und zur Erzeugung eines ODER-verknüpften Ausgangssignals der auf der ersten und der zweiten Schicht (1, 3) aufgezeichneten Informationsbits.

16. Thermomagnetisches Aufzeichnungssystem nach einem der Ansprüche 1 bis 12 mit einer Wiedergabeeinrichtung mit Mitteln zur Erzeugung von Licht, das durch die erste und die zweite Schicht (1, 3) aus weichmagnetischem Material hindurchtritt und auf das magnetische Aufzeichnungsmedium (5) in seinen zylindrischen magnetischen Domänen auftrifft, sowie mit Mitteln zur Feststellung, ob ein Ausgangssignal, das auf der ersten und der zweiten Schicht (1, 3) aufgezeichneten Informationsbits entspricht einen vorbestimmten Schwellwert (25) überschreitet oder nicht, und zur Erzeugung eines NAND-verknüpften Ausgangssignals der auf der ersten und der zweiten Schicht (1, 3) aufgezeichneten Informationsbits.

17. Thermomagnetisches Aufzeichnungssystem nach einem der Ansprüche 1 bis 12 mit einer Wiedergabeeinrichtung mit Mitteln zur Erzeugung von Licht, das durch die erste und die zweite Schicht (1, 3) aus weichmagnetischem Material hindurchtritt und auf das magnetische Aufzeichnungsmedium (5) in seinen zylindrischen magnetischen Domänen auftrifft, sowie mit Mitteln zur Feststellung, ob ein Ausgangssignal, das auf der ersten und der zweiten Schicht (1, 3) aufgezeichneten Informationsbits entspricht, einen vorbestimmten Schwellwert (26) überschreitet oder nicht, und zur Erzeugung eines NOR-verknüpften Ausgangssignals der auf der ersten und der zweiten Schicht (1, 3) aufgezeichneten Informationsbits.

**Revendications**

1. Système d'enregistrement thermomagnétique comprenant:

un support d'enregistrement (5) formé en laminant une première couche (1) d'un matériau magnétique doux ayant un axe d'aimantation facile perpendiculaire à la surface de la couche, une couche intermédiaire non magnétique transparente (2;6), une deuxième couche (3) d'un matériau magnétique doux ayant un axe d'aimantation facile perpendiculaire à la surface de la couche et un film de métal ou de semi-métal (4) voisin de la deuxième couche (3);

un moyen (7) pour appliquer un champ magnétique de polarisation au support d'enregistrement (5) de telle sorte que les première et deuxième couches (1, 3) d'un matériau magnétique doux sont aimantées pour comporter un seul domaine magnétique sur l'ensemble de leurs surfaces et une direction d'aimantation orientée perpendiculairement aux surfaces de couches; et

un moyen générateur d'impulsions lumineuses pour rendre une impulsion lumineuse ayant une première longueur d'onde incidente sur la première couche (1) d'un matériau magnétique doux afin de former un domaine magnétique cylindrique aimanté dans la direction opposée à la direction d'aimantation du champ magnétique de polarisation appliqué de manière à enregistrer ainsi un bit d'information (14a) dans la première couche (1), et pour rendre une impulsion lumineuse ayant une deuxième longueur d'onde qui traverse les première et deuxième couches (1, 3) d'un matériau magnétique doux incidente sur la deuxième couche (3) afin de former un domaine magnétique cylindrique aimanté dans la direction opposée à la direction d'aimantation du champ magnétique de polarisation appliqué de manière à enregistrer ainsi un bit d'information (14b) dans la deuxième couche (3).

2. Système d'enregistrement thermomagnétique selon la revendication 1, dans lequel le film de métal (4) est constitué d'un métal de transition choisi dans les groupes Ib, IIb, IIIa, IVa, Va, VIa, VIIa et VIII du Tableau périodique, ou d'un métal choisi dans le groupe IIIb (excepté le bore et le plomb) du Tableau périodique.

3. Système d'enregistrement thermomagnétique selon la revendication 1, dans lequel le film de semi-métal (4) est constitué de Te, Bi, Sb ou d'un alliage de deux des métaux ou plus.

4. Système d'enregistrement thermomagnétique selon la revendication 2, dans lequel le film de métal (4) est constitué de Al ou de Cr.

5. Système d'enregistrement thermomagnétique selon l'une quelconque des revendications 1 à 4, dans lequel au moins une des couches (1, 3) d'un matériau magnétique doux est constitué d'un grenat magnétique doux.

6. Système d'enregistrement thermomagnétique selon l'une quelconque des revendications 1 à 5, dans lequel l'impulsion lumineuse ayant la première longueur d'onde est une impulsion de lumière laser à Ar.

7. Système d'enregistrement thermomagnétique selon l'une quelconque des revendications 1 à 6, dans lequel l'impulsion lumineuse ayant la deuxième longueur d'onde est une impulsion de lumière laser à He-Ne ou de lumière laser à semiconducteur.

8. Système d'enregistrement thermomagnétique selon l'une quelconque des revendications 1 à 7, dans lequel le film de métal ou de semi-métal (4) a une épaisseur comprise entre 5 et 100 nanomètres (50 à 1000 Angströms).

9. Système d'enregistrement thermomagnétique selon l'une quelconque des revendications 1 à 8, dans lequel la couche intermédiaire non magnétique (2;6) est constituée d'un grenat non magnétique.

10. Système d'enregistrement thermomagnétique selon l'une quelconque des revendications 1 à 9, dans lequel les première et deuxième couches (1, 3) d'un matériau magnétique doux sont différentes en ce qui concerne l'angle de rotation de Faraday.

11. Système d'enregistrement thermomagnétique selon la revendication 10, dans lequel les première et deuxième couches (1, 3) d'un matériau magnétique doux sont différentes en épaisseur.

12. Système d'enregistrement thermomagnétique selon la revendication 10 ou la revendication 11, dans lequel les première et deuxième couches (1, 3) d'un matériau magnétique doux sont constituées de grenats magnétiques doux ayant différentes compositions.

13. Système d'enregistrement thermomagnétique selon l'une quelconque des revendications 1 à 12, comportant un dispositif de reproduction comprenant un moyen pour rendre la lumière, qui traversera les première et deuxième couches (1, 3) d'un matériau magnétique doux, incidente sur le support d'enregistrement magnétique (5) où se trouvent ses domaines magnétiques cylindriques de manière à reproduire ainsi les informations enregistrées.

14. Système d'enregistrement thermomagnétique selon l'une quelconque des revendications 1 à 12, comportant un dispositif de reproduction comprenant un moyen pour rendre la lumière, qui traversera les première et deuxième couches (1, 3) d'un matériau magnétique doux, incidente sur le support d'enregistrement (5), et un moyen pour détecter si un signal de sortie correspondant aux bits d'information enregistrés sur les première et deuxième couches (1, 3) dépasse ou non une valeur de seuil sélectionnée (26) de manière à produire ainsi un signal de sortie calculé par combinaison logique ET des bits d'informations enregistrés sur les première et deuxième couches (1, 3).

15. Système d'enregistrement thermomagnétique selon l'une quelconque des revendications 1 à 12, comportant un dispositif de reproduction comprenant un moyen pour rendre la lumière, qui traversera les première et deuxième couches (1, 3) d'un matériau magnétique doux, incidente sur le support d'enregistrement (5), et un moyen pour détecter si un signal de sortie correspondant aux bits d'information enregistrés sur les première et deuxième couches (1, 3) dépasse ou non une valeur de seuil sélectionnée (25) de manière à produire ainsi un signal de sortie calculé par combinaison logique OU des bits d'information enregistrés sur les première et deuxième couches (1, 3).

16. Système d'enregistrement thermomagnétique selon l'une quelconque des revendications 1 à 12, comportant un dispositif de reproduction comprenant un moyen pour rendre la lumière, qui traversera les première et deuxième couches (1, 3) d'un matériau magnétique doux, incidente sur le support d'enregistrement (5), et un moyen pour détecter si un signal de sortie correspondant aux bits d'information enregistrés sur les première et deuxième couches (1, 3) dépasse ou non une valeur de seuil sélectionnée (25) de manière à produire ainsi un signal de sortie calculé par combinaison logique NON-ET des bits d'information enregistrés sur les première et deuxième couches (1, 3).

17. Système d'enregistrement thermomagnétique selon l'une quelconque des revendications 1 à 12, comportant un dispositif de reproduction comprenant un moyen pour rendre la lumière, qui traversera les première et deuxième couches (1, 3) d'un matériau magnétique doux, incidente sur le support d'enregistrement (5), et un moyen pour détecter si un signal de sortie correspondant aux bits d'information enregistrés sur les première et deuxième couches (1, 3) dépasse ou non une valeur de seuil sélectionnée (26) de manière à produire ainsi un signal de sortie calculé par combinaison logique NI des bits d'information enregistrés sur les première et deuxième couches (1, 3).

FIG. 1

FIG. 2

FIG. 3

# F I G. 4

2 3 4
5
1
6
7
27
11
13
12
10
9
8

# F I G. 5

Direction of analyzer

15

$(\phi_1 + \phi_2)$

$(\phi_1 - \phi_2)$

14

Direction of analyzer

$-(\phi_1 - \phi_2)$

$-(\phi_1 + \phi_2)$

## F I G. 6

## F I G. 8A

## F I G. 8B

## F I G. 9A

## F I G. 9B

## F I G. 7

## F I G. 10

FIG. 11